# EUROPÄISCHE PATENTSCHRIFT

(11) **EP 4 237 365 B1**
(45) Veröffentlichungstag und Bekanntmachung des Hinweises auf die Patenterteilung: **04.12.2024**
(21) Anmeldenummer: 21801541.0
(22) Anmeldetag: 28.10.2021
(51) Int. Cl.: B66B 1/34, B66B 25/00

(54) **VERFAHREN ZUM ERKENNEN VON VERÄNDERUNGEN IN EINEM ZU ÜBERWACHENDEN BEREICH**
METHOD FOR DETECTING CHANGES IN AN AREA TO BE MONITORED
PROCÉDÉ DE DÉTECTION DE CHANGEMENTS DANS UNE ZONE À SURVEILLER

(30) Priorität: 29.10.2020 EP 20204658
(43) Veröffentlichungstag der Anmeldung: 06.09.2023
(73) Patentinhaber: INVENTIO AG, 6052 Hergiswil (CH)
(72) Erfinder: DEHMEL, Lars, 12049 Berlin (DE); PFEIFER, Felix, 10829 Berlin (DE)
(74) Vertreter: Inventio AG
(86) Internationale Anmeldenummer: PCT/EP2021/079987
(87) Internationale Veröffentlichungsnummer: WO 2022/090396

(56) Entgegenhaltungen:
- EP-A1- 1 345 445
- EP-A1- 3 339 234
- WO-A1-2018/050471
- DE-A1- 102015 007 641
- DE-A1- 102015 007 641
- DE-A1- 2 541 901
- DE-A1- 2 541 901
- DE-A1- 4 208 173
- DE-A1- 4 208 173
- JP-U- S57 149 477
- JP-U- S57 149 477
- US-A- 4 537 287
- US-A- 4 537 287
- US-A- 5 761 155
- US-A- 5 761 155

## Beschreibung

Die vorliegende Erfindung betrifft ein Verfahren zum Erkennen von Veränderungen in einem zu überwachenden Bereich einer Beförderungsanlage, ein Verfahren zum Erkennen eines leeren zu überwachenden Bereiches einer Beförderungsanlage, ein System mit einem Schallsensor und einer mit dem Schallsensor verbundenen Auswerteeinheit zur Erkennung von Veränderungen in einem zu überwachenden Bereich einer Beförderungsanlage, und eine Beförderungsanlage.

Beförderungsanlagen können beispielsweise Aufzüge, Fahrtreppen und Fahrsteige sein. Derartige Beförderungsanlagen werden sowohl für den Personentransport als auch für den Warentransport eingesetzt.

Aufzüge werden unter anderem dazu eingesetzt, Passagiere zwischen verschiedenen Stockwerken innerhalb eines Gebäudes zu befördern. Dabei gibt es unterschiedlichste Gründe, Veränderungen in einer Aufzugskabine des Aufzuges zu erkennen. Die Aufzugskabine kann in diesem Fall den zu überwachenden Bereich im Sinne der Erfindung bilden. Veränderungen innerhalb der Aufzugskabine können dabei sein:
- Eine Veränderung der Anzahl der Personen, die sich in der Aufzugskabine befinden;
- Eine Veränderung der Anzahl beweglicher Gegenstände, wie zum Beispiel Gepäckstücke, Koffer, wie auch irgendwelche Gegenstände. Gegenstände können beispielsweise sein: von einer Person verlorene wie beispielsweise liegen gelassene Gegenstände wie zum Beispiel ein Schlüsselbund, Mobiltelefon, Briefumschlag, Werkzeuge wie zum Beispiel Hammer, Schraubenzieher etc., oder dergleichen;
- Ein Handlauf, Spiegel, Sitzmöglichkeit etc. einer Inneneinrichtung der Aufzugskabine, welche Aufgrund von Abnutzung, Alterung oder Vandalismus nicht mehr an seinem bestimmungsgemässen Ort befestigt ist.

Nebst Veränderungen zu erkennen, kann es auch nützlich oder notwendig sein, zu erkennen, ob eine Aufzugskabine leer oder belegt ist. "Belegt" ist hier breit als "nicht leere Aufzugskabine" zu verstehen. Eine nicht leere Aufzugskabine kann dabei sein:
- Wenn sich eine Person in der Aufzugskabine befindet; und/oder
- Wenn sich ein Gegenstand, insbesondere ein beweglicher Gegenstand, in der Aufzugskabine befindet.

Es gibt unterschiedlichste Gründe, wieso es notwendig ist, eine Veränderung in einer Aufzugskabine zu erkennen oder den Zustand "leer" oder "belegt" der Aufzugskabine zu kennen. Im leeren Zustand kann beispielsweise das Licht der Aufzugskabine und/oder die Lüftung der Aufzugskabine ausgeschaltet werden. Weiter kann das Anfahren eines bestimmten Stockwerkes nur der leeren Aufzugskabine erlaubt sein, jedoch nicht, falls die Aufzugskabine belegt ist. Ebenso ist es denkbar, dass bei einer Aufzugskabine mit mehreren Türen, das Öffnen einer oder mehrerer Türen gleichzeitig nur bei leerer Aufzugskabine möglich sein darf. Solche Anforderungen sind bei Aufzugsanlagen gefordert, die zwischen unterschiedlichen Sicherheitsbereichen verkehren, wie dies bei Flughäfen, Behörden oder auch Spitälern anzutreffen ist.

Ein zu überwachender Bereich einer Aufzugsanlage kann auch der Zugangsbereich zur Aufzugsanlage sein, das hiesst ein zugänglicher Bereich um eine Schachttüre der Aufzugsanlage herum auf einem Stockwerk. Wie gross dieser zu überwachende Bereich ist, hängt von den jeweiligen Anforderungen ab, ist aber typischerweise ein Bereich mit einem Radius von bis zu einigen Metern um die Schachttüre herum, beispielsweise von bis zu 5 Metern, bevorzugt von bis zu 3 Metern und besonders bevorzugt von bis zu 2 Meter. Die Form des Bereichs kann selbstverständlich auch eckig sein, wie zum Beispiel viereckig.

Bei Fahrtreppen und Fahrsteigen kann der zu überwachende Bereich durch den Eingangsbereich beziehungsweise Zugangsbereich zur Fahrtreppe oder Fahrsteig als auch durch den Ausgangsbereich beziehungsweise Abgangsbereich zur Fahrtreppe oder Fahrsteig gebildet sein. Wie gross dieser zu überwachende Bereich ist, hängt wiederum von den jeweiligen Anforderungen ab.

Aus dem Stand der Technik sind verschiedene Systeme bekannt wie Bereiche überwacht werden können. US 5 761 155 A offenbart ein Verfahren nach dem Oberbegriff von Anspruch 1. US 5 761 155 A offenbart ein System mit einem Schallsensor und einer mit dem Schallsensor verbundenen Auswerteeinheit.

Beispielsweise sind Sensoren bekannt, welche die Anwesenheit von Personen in einem Raum erkennen können. Diese basieren beispielsweise auf Ultraschall und Nutzen zur Erkennung von Personen den Dopplereffekt aus. Dies setzt jedoch minimale Bewegungen der Personen voraus, beispielsweise der Hände oder des Kopfes. Absolut stillstehende Personen wie auch Gegenstände können diese auf dem Dopplereffekt basierenden Sensoren nicht erkennen. Andere Sensoren basieren auf Infrarot. Diese können Personen erkennen, eignen sich jedoch nur schlecht oder gar nicht zum Erkennen von Gegenständen.

Weiter sind Systeme zum Erkennen von Veränderungen in einer Aufzugskabine bekannt, die auf der Auswertung von optischen Bildern, beispielsweise Fotos oder Videobilder, beruhen. Diese Systeme sind jedoch bei Aufzugskabinen mit einer oder mehreren, durchsichtigen Seitenwänden oder eines durchsichtigen Bodens schlecht geeignet, da sich die Umgebung ausserhalb der Aufzugskabine ändert. Ebenso sind heutzutage Bildschirme in Aufzugskabinen anzutreffen, welche bewegte Inhalte zeigen und bei einer optischen Auswertung zu Fehlinformationen führen können.

Ein weiteres System und Verfahren zum Erkennen von Veränderungen in einem Raum ist "UltraSense: A Self-Calibrating Ultrasound-Based Room Occupancy Sensing System", Abbass Hammoud, Michel Deriaz, Dimitri Konstantas, Procedia Computer Science 109C (2017) 75-83 bekannt. Dieses bekannte Verfahren basiert auf einem Aussenden eines Ultraschall-Impulses, der Aufzeichnung eines Antwortsignales des Ultraschall-Impulses und der direkten Berechnung einer Fourier-Transformation des Antwortsignales zur weiteren Auswertung eines Frequenzspektrums des Antwortsignales bezüglich Dopplerverschiebungen.

Aufgabe der vorliegenden Erfindung ist es, ein robustes System und ein robustes Verfahren zur Erkennung von Veränderungen jeglicher Art in einem zu überwachenden Bereich anzugeben. Dabei soll auch zuverlässig erkannt werden, ob ein oder mehrere ruhende Objekte und/oder Personen anwesend sind oder nicht, und/oder ob sich deren Anzahl und/oder Position verändert hat.

Eine weitere Aufgabe der vorliegenden Erfindung ist es, ein robustes System und ein robustes Verfahren zur Erkennung eines leeren zu überwachenden Bereiches anzugeben sowie eine Beförderungsanlage mit einem solchen System.

Gelöst werden diese Aufgaben durch die Gegenstände der unabhängigen Ansprüche.

Vorteilhafte Ausführungsformen der Erfindung sind durch die abhängigen Patentansprüche umschrieben und/oder in der weiteren Beschreibung der Erfindung angegeben.

Das erfindungsgemässe Verfahren zum Erkennen von Veränderungen in einem zu überwachenden Bereich einer Beförderungsanlage weist einen Schallsensor und eine mit dem Schallsensor verbundene Auswerteeinheit auf. Das Verfahren ist gekennzeichnet durch
- Aussenden eines akustischen Impulses in den zu überwachenden Bereich,
- Aufzeichnen eines akustischen Antwortsignales des Impulses als Ist-Signal,
- Bestimmen einer Hüllkurve des Ist-Signales,
- Erkennen von Veränderungen basierend auf der Hüllkurve,
- wobei das Erkennen von Veränderungen basierend auf der Hüllkurve weiter gekennzeichnet ist durch das Bestimmen eines Spektrums der Hüllkurve des Ist-Signales als Ist-Messung.

Dieses Erfindungsgemässe Verfahren ermöglicht eine zuverlässige Erkennung von Veränderungen in dem zu überwachenden Bereich, der beispielsweise durch eine Aufzugskabine ausgebildet sein kann. Durch die Bestimmung der Hüllkurve wird erreicht, dass das Erkennen von Veränderungen weitgehend unabhängig ist von der verwendeten Frequenz des akustischen Impulses. Weiter wurde experimentell erkannt, dass das Erkennen von Veränderungen basierend auf der Hüllkurve zuverlässig funktioniert.

Im Vergleich zum Stand der Technik, welche zur Erkennung von Veränderungen auf dem Dopplereffekt beruhen, ist es mit diesem Verfahren auch möglich, ruhende Personen und Objekte, zu erkennen.

Weiter ist es vorteilhaft, dass die verwendeten Daten, insbesondere das Ist-Signal keine Identifikation einer bestimmten Person zulassen.

Gemäss einer weiteren, bevorzugten Ausführungsform der Erfindung wird eine Referenz-Messung mit der Ist-Messung verglichen, um eine Veränderung zu erkennen.

Diese vorteilhafte Ausführungsform erlaubt das Vergleichen der Ist-Messung mit einer Referenz-Messung, was sich bei den Versuchen als vorteilhaft erwiesen hat.

Gemäss einer bevorzugten Ausführungsform der Erfindung wird als Spektrum ein Frequenz-Spektrum verwendet.

Gemäss einer weiteren, bevorzugten Ausführungsform der Erfindung wird als Spektrum ein Amplituden-Spektrum, beispielsweise ein Amplituden-Frequenz-Spektrum verwendet.

Diese vorteilhafte Ausführungsform erlaubt, dass insbesondere die Amplituden-Spektren miteinander vergleichen werden. Vorteilhaft erweist sich bei den Amplituden-Spektren im Vergleich zu anderen Spektren des Frequenz-Raumes wie zum Beispiel ein Phasen-Spektrum, Spektrum der Realteile oder Spektrum der Imaginärteile, dass das Amplituden-Spektrum von einer zeitlichen Verschiebung des Ist-Signales oder partiellen zeitlichen Verschiebungen von Teilsignalen des Ist-Signales unabhängig ist. Als "Amplitude" wird hier die Wurzel aus der Summe der Quadrate von Realteil und Imaginärteil verstanden.

Beispielsweise wurde bei Testmessungen festgestellt, dass trotz unveränderter Test-Bedingungen im zu überwachenden Bereich eine gewisse Variation im Signal, das heisst im Ist-Signal wie auch im Referenz-Signal, festzustellen sind. Es wird vermutet, dass diese Variationen auf Luftturbulenzen oder Temperaturschwankungen im zu überwachenden Bereich zurückzuführen sind. Turbulenzen können beispielsweise durch Personen verursacht sein, die den zu überwachenden Bereich betreten, verlassen, durchqueren oder auch nur für eine kurze Zeitdauer betreten und wieder verlassen. Bei den TestMessungen hat sich jedoch gezeigt, dass die Amplituden-Spektren zu unterschiedlichen Signalen bei gleichen Bedingungen im zu überwachenden Bereich trotz Variationen im Signal weitgehend gleich sind.

Gemäss einer bevorzugten Ausführungsform der Erfindung wird beim Vergleichen eine Differenz von Referenz-Messung und Ist-Messung bestimmt.

Gemäss einer bevorzugten Ausführungsform der Erfindung wird ein Vergleichswert durch Summieren der Differenzen oder durch Summieren von aus den Differenzen bestimmten Werten bestimmt.

Gemäss einer bevorzugten Ausführungsform der Erfindung wird die Ist-Messung als unterschiedlich zur Referenz-Messung erkannt, falls der Vergleichswert eine Toleranzschwelle übersteigt.

Gemäss einer bevorzugten Ausführungsform der Erfindung erfolgt das Aussenden des akustischen Impulses über einen Winkelbereich beziehungsweise einem Öffnungswinkel von zumindest 90 Grad.

Diese vorteilhafte Ausführungsform erlaubt, den zu überwachenden Bereich durch den Winkelbereich des ausgesendeten Impulses geometrisch zu bestimmen.

Beispielsweis ist ein Zugangsbereich zu einer Beförderungsanlage hin oder von dieser weg typischerweise offen, das heisst nicht durch bauliche Massnahmen vom restlichen Raum abgegrenzt. Jedoch kann es wünschenswert sein, den Zugangsbereich zu überwachen. Bei einer Aufzugsanlage kann es nützlich sein, Informationen zu erhalten, ob sich eine Person, ein Gegenstand oder auch ein Roboter vor einer Schachttüre befindet. Beispielsweise kommt es vor, dass Personen Aufzugs-Rufe auslösen, sich aber bevor die Aufzugskabine das Stockwerk, von dem der Ruf ausgelöst wurde, erreichen kann, sich die Person wieder von der Aufzugsanlage entfernt. In einem derartigen Fall kann durch das Überwachen des Zugangsbereichs ein Ruf gelöscht werden, sobald sich keine Person mehr im zu überwachenden Bereich, dem Zugangsbereich zur Aufzugsanlage, befindet.

Ebenso erlaubt diese vorteilhafte Ausführungsform, Gegenstände zu erkennen, die im Zugangsbereich bzw. in dem zu überwachenden Bereich deponiert werden und die Sicherheit von Personen gefährden könnten.

Gemäss einer bevorzugten Ausführungsform der Erfindung weist die Auswerteeinheit einen Prozessor, zumindest einen mit dem Prozessor über einen Bus verbundenen Speicher und zumindest eine über den Bus verbundene Schnittstelle zur Kommunikation auf.

Gemäss einer bevorzugten Ausführungsform der Erfindung werden die Bestimmungen und das Erkennen von Veränderungen durch die Auswerteeinheit durchgeführt.

Ein weiterer Aspekt der Erfindung betriff ein Verfahren zum Erkennen eines leeren zu überwachenden Bereiches einer Beförderungsanlage, wobei hierzu das Referenzsignal bei einem leeren zu überwachenden Bereich bestimmt wird.

Gemäss einer bevorzugten Ausführungsform der Erfindung wird der zu überwachende Bereich als leer erkannt, falls das Ist-Signal als im Wesentlichen gleich zum Referenz-Signal erkannt wird.

Ein weiterer Aspekt der Erfindung betriff ein System mit einem Schallsensor und einer mit dem Schallsensor verbundenen Auswerteeinheit zur Erkennung von Veränderungen in einem zu überwachenden Bereich einer Beförderungsanlage zur Durchführung eines der oben beschriebenen Verfahren.

Ein weiterer Aspekt der Erfindung betriff eine Beförderungsanlage mit dem oben beschriebenen System.

Nachfolgend werden Ausführungsbeispiele der Erfindung unter Bezugnahme auf die beigefügten Zeichnungen beschrieben, wobei weder die Zeichnungen noch die Beschreibung als die Erfindung einschränkend auszulegen sind.

Weitere bevorzugte Ausführungsformen der Erfindung werden auch anhand der Ausführungsbeispiele beschrieben.
- Fig. 1: zeigt rein schematisch eine Aufzugskabine.
- Fig. 2: zeigt rein schematisch eine Aufzugsanlage.
- Fig. 3: zeigt rein schematisch für eine Referenz-Messung einen akustischen Impuls, ein Antwortsignal des Impulses und dessen Hüllkurve sowie ein zugehöriges Spektrum.
- Fig. 4: zeigt rein schematisch für eine Ist-Messung den akustischen Impuls, ein Antwortsignal des Impulses und dessen Hüllkurve sowie ein zugehöriges Spektrum.
- Fig. 5: zeigt rein schematisch einen Ausschnitt einer Aufzugsanlage, bei welcher ein zu überwachender Bereich vor einer Schachttüre der Aufzugsanlage liegt.
- Fig. 6: zeigt rein schematisch ein Verfahren zum Erkennen von Veränderungen in einem zu überwachenden Bereich.

Die Figuren sind lediglich schematisch und nicht massstabsgetreu. Gleiche Bezugszeichen bezeichnen in den verschiedenen Figuren gleiche oder gleichwirkende Merkmale.

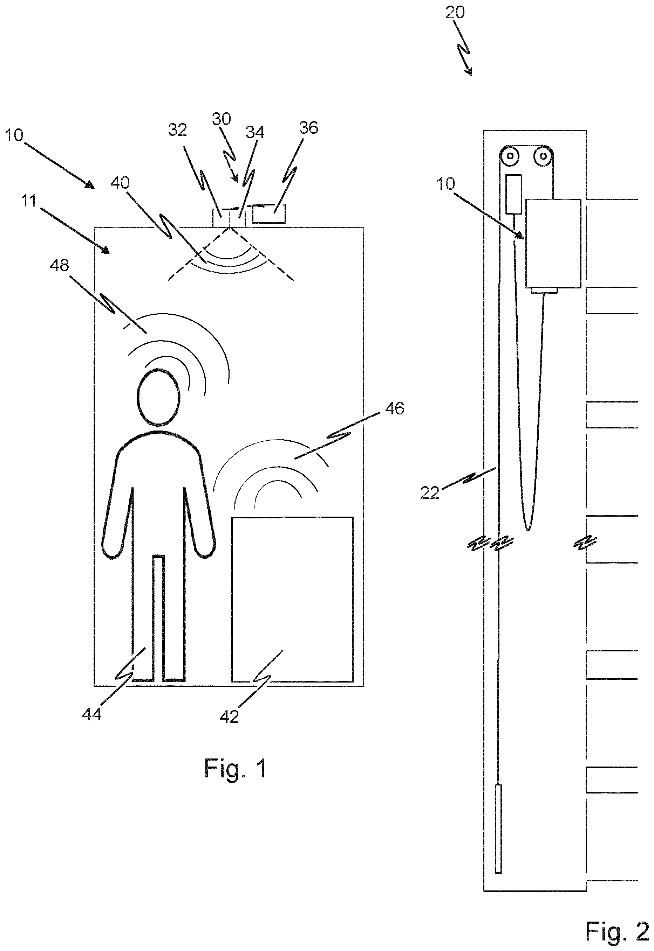

Fig. 1 zeigt eine Aufzugskabine 10 für eine in Fig. 2 gezeigte Aufzugsanlage 20, welche wie eingangs beschrieben eine Beförderungsanlage im Sinne dieser Patentanmeldung ist. Wie Fig. 2 zeigt, weist die Aufzugsanlage 20 die Aufzugskabine 10 auf, welche zwischen verschiedenen Stockwerken mittels eines Antriebssystems bewegt werden kann. Als Antriebssystem ist ein Treibscheibenaufzug gezeigt, jedoch kann jedes beliebige Antriebssystem für eine Aufzugsanlage verwendet werden. Als Tragmittel 22 sind Drahtseile gezeigt, jedoch können auch Tragriemen oder dergleichen verwendet werden. Alternative Antriebssysteme wie ein Hydraulikaufzug, Zahnstangenaufzug, ein Vakuumaufzug oder ein beispielsweise mittels eines Linearmotor realisierten, seilloser Aufzug können ebenso zur Anwendung gelangen.

Wie Fig. 1 zeigt, ist die Aufzugskabine 10 mit einem Detektionsmodul 30 ausgestattet. Dieses weist einen Sender 32, einen Empfänger 34 und eine mit dem Sender 32 und dem Empfänger 34 verbundene Auswerteeinheit 36 auf. In diesem Ausführungsbeispiel wird ein zu überwachender Bereich 11 durch die Aufzugskabine 10 ausgebildet. Begrenzt ist der Bereich durch Seitenwände, eine Bodenfläche, eine Deckenfläche und eine Kabinentüre der Aufzugskabine 10.

Die Auswerteeinheit 36 weist typischerweise einen Prozessor, zumindest einen mit dem Prozessor über einen Bus verbundenen Speicher und zumindest eine über den Bus verbundene Schnittstelle zur Kommunikation aufweist.

Das Detektionsmodul 30 dient dazu, Veränderungen innerhalb der Aufzugskabine 10 zu erkennen. Eine Veränderung kann dabei ein hinzugefügter Gegenstand 42, wie beispielsweise ein vergessenes Paket, sein. Weiter kann eine Veränderung innerhalb der Aufzugskabine auch eine sich neu in der Aufzugskabine 10 sich befindende Person 44 sein. Auch ein aus der Aufzugskabine 10 entfernter Gegenstand, wie zum Beispiel ein Handlauf, kann eine Veränderung sein. Das Ziel der Erfindung ist es, irgendwelche Veränderungen im Innenraum der Auszugskabine 10 beziehungsweise im zu überwachenden Bereich 11 zu erkennen.

Hierzu sendet der Sender 32 einen akustischen Impuls 40, insbesondere einen Schallimpuls von in etwa 48 kHz und eine Dauer von in etwa 0.3 ms aus. Die Dauer von 0.3 ms entspricht dabei einigen Schwingungen bei 48 kHz, wobei zu beachten ist, dass der Sender 32 auch eine Einschwingdauer wie auch eine Ausschwingdauer hat. Die Frequenz wurde dabei derart gewählt, dass diese weder für Menschen noch Haustiere, wie beispielsweise Hunde, hörbar ist. Falls eine andere Frequenz als die 48 kHz gewählt wird, ist die Dauer entsprechend anzupassen. Als Schall wird vorzugsweise Ultraschall bei einer Frequenz ab 16 kHz verwendet, sodass der Impuls und dessen Antwortsignal zumindest für Menschen nicht oder nur schwach hörbar ist.

Das Aussenden erfolgt über einen Winkelbereich von zumindest 90°, vorzugsweise von zumindest 120° und besonders bevorzugt von zumindest 150°. Unter Winkelbereich ist hier der Öffnungswinkel über welchen der Impuls ausgesendet wird zu verstehen. Bei einem Winkelbereich von 180° kann im Normalfall der gesamte Innenbereich der Kabine vom Impuls beziehungsweise Schallsignal 40 erfasst werden. Der Winkelbereich ist in Fig. 1 durch gestrichelte Linien dargestellt. In Fig. 1 ist der Sender 32 mittig an der Decke der Aufzugskabine 10 angeordnet. Falls alternativ der Sender 32 in einer Ecke der Aufzugskabine 10 angeordnet wäre, würde auch ein Impuls 40, der über einen Winkelbereich von 90° ausgestrahlt wird, den gesamten Innenraum der Aufzugskabine 10 erfassen.

Der Impuls 40 wird von Oberflächen der Aufzugskabine 10 wie auch von irgendwelchen Objekten beziehungsweise Gegenständen 42 oder Personen 44 wie auch Tieren innerhalb der Kabine 10 reflektiert. Objekte können dabei bewegliche Gegenstände wie Pakete sein, aber auch fest im Kabineninnenraum angebrachte Gegenstände wie Handläufe und dergleichen. Das reflektierte Schallsignal des in Fig. 1 gezeigten Objektes 42 ist durch ein Wellenpaket 46 dargestellt. Das reflektierte Schallsignal der in der Fig. 1 gezeigten Person 44 ist durch das Wellenpaket 48 dargestellt.

Die reflektierten Schallsignale 46, 48 werden durch den Empfänger 34 als akustisches Antwortsignal des Impulses 40 detektiert und an die Auswerteeinheit 36 zur Auswertung weitergeleitet.

Fig. 1 zeigt sowohl einen Sender 32 als auch einen Empfänger 34. In einer alternativen Ausführungsform kann die Funktion des Senders und des Empfängers in einem Gerät zusammengefasst sein, das sowohl als Sender als auch als Empfänger betrieben werden kann. In englischer Sprache wird ein solches Gerät als Transducer bezeichnet, der auch im Deutschen gebräuchlich ist.

Im Folgenden wird das Verfahren zum Erkennen von Veränderungen in einem zu überwachenden Bereich anhand einer Aufzugskabine als den zu überwachenden Bereich detailliert beschrieben.

Das erfindungsgemässe Verfahren dient dazu, Veränderungen zu erkennen. Dabei soll nicht erkannt werden, was sich verändert hat, sondern ob eine Veränderung stattgefunden hat.

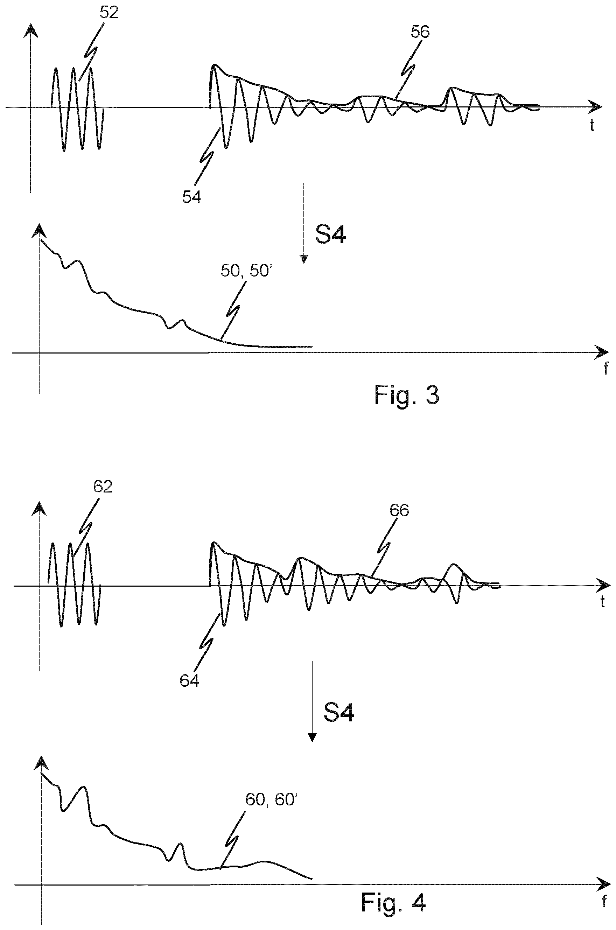

Gemäss einem Ausführungsbeispiel der Erfindung, benötigt die Auswerteeinheit 36 zumindest eine in Fig. 3 gezeigte Referenz-Messung 50, welche in jenem Zustand der Aufzugskabine aufgezeichnet wird, gegenüber welchem Veränderungen erkannt werden sollen. Die Referenz-Messung wie auch die Ist-Messung erfolgen prinzipiell analog zueinander, jedoch zu unterschiedlichen Zeitpunkten.

Für das Bestimmen der Referenz-Messung 50 wird, wie in Fig. 3 gezeigt, ein akustischer Impuls 52, der in Fig. 1 als Impuls 40 dargestellt ist, wie oben beschrieben ausgesendet. Das akustische Antwortsignal des ausgesendeten Impulses wird durch den Empfänger 34 empfangen und als Referenz-Signal 54 bezeichnet. Die Frequenz des Antwortsignales entspricht im Wesentlichen jener des ausgesendeten Impulses, kann sich jedoch auch etwas verschieben. Die Zeitdauer und die Amplitude des Antwortsignales unterscheiden sich jedoch vom ausgesendeten Impuls. Danach wird aus dem Referenz-Signal 54 dessen Hüllkurve bestimmt, welche als Referenz-Hüllkurve 56 bezeichnet wird. Aus der Referenz-Hüllkurve 56 wird mittels Fourier-Transformation ein Amplituden-Spektrum 50' der Hüllkurve bestimmt und als Referenz-Messung 50 gespeichert.

Beispielsweise kann die Referenz-Messung 50 im Speicher der Auswerteeinheit 36 gespeichert werden. Alternative Speicherorte wie das Abspeichern in einem über ein

Datenkommunikationsnetzwerk verbundener Datenspeicher sind ebenso denkbar. Der Datenspeicher kann lokal oder auch dezentral sein.

Zur Bestimmung der Hüllkurve 56 sind in der Akustik verschiedene Verfahren bekannt. Die Hüllkurve eines Signales gibt den Verlauf der Amplitude des Signales wieder.

Im vorliegenden Fall gibt die Hüllkurve 56 des Referenz-Signales 54 den Amplitudenverlauf des Referenz-Signales 54 wieder.

Allgemein kann von einem Signal, beispielsweise einem amplitudenmodenmodulierten Signal, dessen Hüllkurve beispielsweise wie folgt bestimmt werden. Die Demodulation beziehungsweise die Bestimmung der Hüllkurve erfolgt durch Gleichrichtung des Signales mit Hilfe einer Diode. Das gleichgerichtete Signal wird in einen Kondensator geladen, welcher wiederum durch einen Widerstand entladen werden kann. Dadurch ergibt sich die Hüllkurve des Signales. Dies ist beispielsweise im Buch "Die Audio-Enzyklopädie: ein Nachschlagewerk für Tontechniker", ISBN 3598117744, Seite 13 beschrieben. Rechnerisch kann dies beispielsweise wie folgt umgesetzt werden. Zunächst werden die Absolutwerte bestimmt. Alternativ können auch nur die positiven Werte des Signales genommen werden. Danach erfolgt eine Mittelung der Werte über eine gewisse Zeitdauer, um die Hüllkurve zu bestimmen. Die Mittelung kann beispielsweise über Summierung und Mittelwertberechnung, insbesondere einen gleitenden Mittelwert, oder mittels eines entsprechenden Integrales erfolgen.

Alternativ zur Mittelung können auch die einzelnen Maxima des Signals verbunden werden, um die Hüllkurve des Signals zu erhalten. Die einzelnen Maxima können zusätzlich mittels Interpolation miteinander verbunden werden.

Für die Bestimmung des Amplituden-Spektrums 50' wird oben die Fourier-Transformation vorgeschlagen. Anstelle der Fourier-Transformation kann auch die rechnerisch besser geeignete Fast-Fourier-Transformation angewendet werden. Andere Verfahren und/oder Transformationen zur Frequenzanalyse oder auch allgemeiner zur Funktionsanalyse sind ebenso anwendbar wie zum Beispiel eine Wavelet-Transformation.

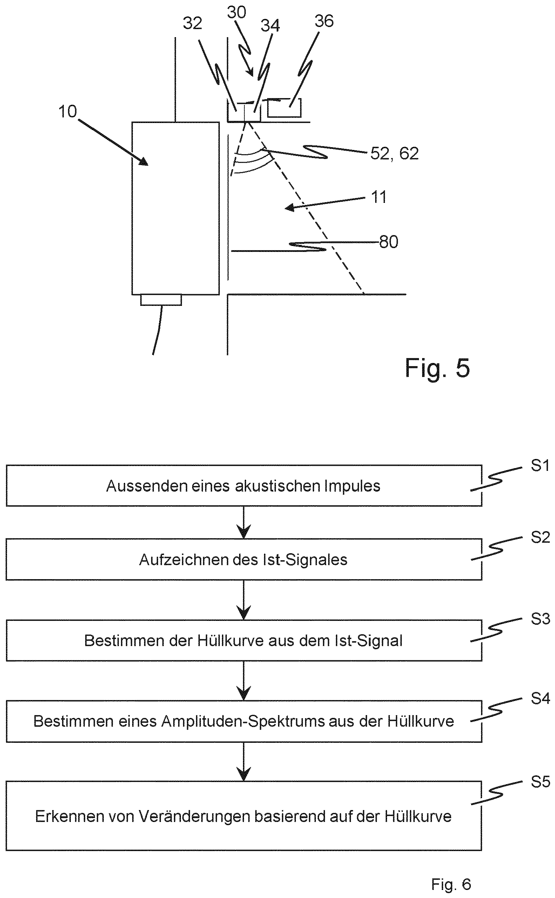

Um zu einem beliebigen Zeitpunkt nach der Aufzeichnung der Referenz-Messung 50 eine Veränderung gegenüber dem Zeitpunkt der Referenz-Messung 50 in und/oder an der Aufzugskabine 10 erkennen zu können, wird das erfindungsgemässe Verfahren wie folgt durchgeführt. Rein schematisch sind die Verfahrensschritte in Fig. 6 dargestellt.

Wie in Fig. 4 gezeigt, wird in einem Verfahrensschritt S 1 ein akustischer Impuls 62 wie oben beschrieben ausgesendet. Der Impuls 62 breitet sind in der Kabine 10, deren Innenraum den zu überwachenden Bereich 11 bildet, aus und wird von reflektierenden Oberflächen reflektiert. Das akustische Antwortsignal dieses Impulses 62 ist in Fig. 1 durch Schallwellen 46, 48 dargestellt.

Dieses akustische Antwortsignal wir analog zum Verfahren der Referenz-Messung 50 wiederum, in einem Verfahrensschritt S2, durch den Schallsensor 34, der auch als Empfänger bezeichnete wird, empfangen beziehungsweise aufgezeichnet. Das empfangene Signal wird als Ist-Signal 64 bezeichnet. Danach wird in einem Verfahrensschritt S3 aus dem Ist-Signal 64 wie oben beschrieben dessen Hüllkurve, die Ist-Hüllkurve 66 bestimmt.

In diesem Ausführungsbeispiel wird aus der Ist-Hüllkurve 66, wie ebenfalls bereits oben beschrieben, in einem Verfahrensschritt S4 wiederum mittels Fourier-Transformation ein Amplituden-Spektrum 60' der Hüllkurve 66 bestimmt, welche die Ist-Messung 60 bildet. Als Amplitude wird, da die einzelnen Werte des Spektrums im allgemeinen komplexe Zahlen sind, die Wurzel aus der Summe der Quadrate von Realteil und Imaginärteil der komplexen Zahl verstanden. Die oben beschriebenen Alternativen zur Fourier-Transformation können analog auch auf die Hüllkurve des Ist-Signales angewendet werden.

Als nächster Schritt wird in einem Verfahrensschritt S5 eine Erkennung von Veränderungen basierend auf der Hüllkurve 66 durchgeführt.

Hierzu wird in diesem Ausführungsbeispiel die Ist-Messung 60 mit der Referenz-Messung 50 verglichen.

Das Vergleichen kann beispielsweise durch Bestimmen der Differenz zwischen der Referenz-Messung 50 und der Ist-Messung 60 als Funktion der Frequenz bestimmt werden. Die Absolut-Beträge der Differenzen können über einen Frequenzbereich aufsummiert werden, um einen Vergleichswert, der auch als Mass bezeichnet wird, für die Gleichheit der Referenz-Messung 50 zur Ist-Messung 60 zu erhalten. Anstelle der Absolut-Beträge können auch die Quadrate der Differenzen über den Frequenzbereich aufsummiert werden. Anstelle einer Summation kann auch selbstverständlich eine Integration erfolgen. Andere Vergleichsoperationen, mittels deren die Gleichheit oder Ähnlichkeit zweier Funktionen bestimmt werden kann, können selbstverständlich ebenfalls angewendet werden. Beispielsweise können Nulldurchgänge hierzu herangezogen werden.

Das erhaltene Mass für die Gleichheit kann in einem folgenden Schritt mit einer Toleranzschwelle verglichen werden, um eine Veränderung in der Aufzugskabine 10 zu erkennen: der Innenraum der Aufzugskabine wird als unverändert erkannt, falls das Mass kleiner als die Toleranzschwelle ist, andernfalls wird eine Veränderung innerhalb der Aufzugskabine erkannt. Falls das Mass kleiner als die Toleranzschwelle ist, ist die Ist-Messung 60 im Wesentlichen gleich zur Referenz-Messung 50.

Im Folgenden werden weitere Ausführungsbeispiele und Ausführungsformen beschrieben, wobei nur auf Unterschiede zu den bereits beschriebenen Ausführungsbeispielen eingegangen wird.

Weiter hat sich herausgestellt, dass die Messergebnisse allem Anschein nach unterschiedlich sind bei verschiedenen Temperaturen. Weiter wird angenommen, dass Turbulenzen der Luft innerhalb der Aufzugskabine 10 die Messungen beeinflussen. Um dennoch Veränderungen in der Aufzugskabine 10 wie auch einem zu überwachenden Bereich 11 zuverlässig zu erkennen, wird in einem weiteren Ausführungsbeispiel wie auch weiteren Ausführungsform der Erfindung eine Vielzahl von Referenz-Messungen durchgeführt, beispielsweise über einen längeren Zeitraum, zum Beispiel über einen Zeitbereich von 24 Stunden.

Weiter können Referenz-Messungen zusätzlich oder alternativ wie folgt durchgeführt werden. Falls Veränderungen gegenüber einer leere Aufzugskabine erkannt werden sollen, werden mehrere Referenz-Messungen der leeren Aufzugskabine über einen gewissen Zeitraum durchgeführt, nachdem zum Beispiel eine Person die Aufzugskabine verlassen hat, damit Referenz-Messungen bei unterschiedlichen Turbulenzen innerhalb der Aufzugskabine aufgezeichnet werden.

Ebenso hat sich gezeigt, dass Referenz-Messungen nicht nur nach dem Verlassen von nur einer Person, sondern auch wenn mehrere Personen die Aufzugskabine verlassen, aufgezeichnet werden sollten. Weiter können Referenz-Messungen aufgezeichnet werden, nachdem eine Person mit einem Haustier, wie zum Beispiel einem Hund, die Aufzugskabine verlassen hat.

Im Falle der Vielzahl der Referenz-Messung, wird die Ist-Messung mit jeder Referenz-Messung verglichen und jene Referenz-Messung für die weitere Auswertung verwendet, welche die kleinste Abweichung zur Ist-Messung aufweist.

In einem in Fig. 5 gezeigten Ausführungsbeispiel ist der Sender 32 und der Empfänger 34 auf einem Stockwerk, ausserhalb der Aufzugskabine und des Schachtes angeordnet. Die Auswerteeinheit 36 kann ebenfalls auf dem Stockwerk angeordnet sein, oder auch an einem beliebigen anderen Ort, beispielsweise in einer Verkleidung einer Schachttüre 80. Der Abstrahlwinkel wie auch die Abstrahlrichtung des Impulses ist derart gewählt, das nur Wellen des Impulses 52, 62 zur Ist-Messung 60 beziehungsweise zur Referenz-Messung 50 in den zu überwachenden Bereich vor der Schachttüre 80 ausgestrahlt werden. Der Bereich vor der Schachttüre kann offen sein, das heisst nicht durch spezielle bauliche Massnahmen Trennwände oder dergleichen abgegrenzt sein. Selbstverständlich kann der zu überwachende Bereich geeignet gekennzeichnet sein wie beispielsweise Bodenmarkierungen, Geländer oder Balustraden, die den Bereich teilweise abgrenzen. Dies ist aber nicht zwingend notwendig.

Gemäss einem weiteren Ausführungsbeispiel wie auch weiteren Ausführungsform ist die Beförderungsanlage als Fahrtreppe oder Fahrsteig ausgebildet. Bei einer Fahrtreppe oder auch bei einem Fahrsteig können beispielsweise der Zugangsbereich oder der Abgangsbereich auf Veränderungen überwacht werden oder ob dieser leer oder von zumindest einer Person, Objekt oder Tier belegt beziehungsweise besetzt ist. Beispielsweise könnte basierend auf der Überwachung ein Betriebsmodus der Fahrtreppe oder Fahrsteig ausgelöst werden. Denkbar wäre etwa, dass die Fahrtreppe oder Fahrsteig angefahren wird, sobald eine Veränderung im Zugangsbereich erkannt wird. Ebenfalls denkbar wäre, dass eine Fahrtreppe oder Fahrsteig nur angefahren wird, falls der Abgangsbereich zu diesem Zeitpunkt leer ist.

Gemäss einem weiteren Ausführungsbeispiel wie auch einer weiteren Ausführungsform kann der zu überwachende Bereich auch durch die Laufzeit der ausgesendeten Impulse und deren reflektierten Antwortsignale beschränkt werden. Beispielsweise können vom Ist-Signal nur Messwerte grösser als eine minimale Zeitdauer und kleiner als eine maximale Zeitdauer verwendet werden. Über die Laufzeitdauer kann der zu überwachende Bereich eingeschränkt werden.

Gemäss einem weiteren Ausführungsbeispiel wie auch einer weiteren Ausführungsform kann auf eine Referenz-Messung zu einem bestimmten Zeitpunkt respektive in einem vorgegebenen Zustand der Beförderungsanlage verzichtet werden. In diesem Fall wird die Beförderungsanlage fortwährend auf Veränderungen überwacht. Anstelle der in den anderen Ausführungsbeispielen verwendeten Referenz-Messung beziehungsweise den Referenz-Messungen, wird eine oder mehrere Ist-Messung als Referenz-Messung verwendet und fortlaufend auf auftretende Veränderungen überwacht.

Gemäss einem weiteren Ausführungsbeispiel wie auch einer weiteren Ausführungsform wird das Erkennen von Veränderungen basierend auf der Hüllkurve durch ein neuronales Netzwerk erkannt. Hierzu wird beispielsweise das neuronale Netzwerk mit Hüllkurven trainiert, welche in jenem Zustand des zu überwachenden Bereichs bestimmt wurden, gegenüber welchem Veränderungen erkannt werden sollen. Auf den oben beschriebenen Verfahrensschritt S4, in welchem das Spektrum der Hüllkurve bestimmt wird, kann in diesem Ausführungsbeispiel verzichtet werden. Es ist jedoch ebenso möglich, zunächst das Spektrum der Hüllkurve zu bestimmen und das neuronale Netzwerk mit Spektren des zu überwachenden Raumes zu trainieren, wie auch die Erkennung von Veränderungen darauf zu basieren.

Gemäss einem weiteren Ausführungsbeispiel wie auch weiteren Ausführungsform wird zum Erkennen von Veränderungen basierend auf der Hüllkurve diese analysiert, um einen Eigenschaftsparameter für den zu überwachenden Raum zu bestimmen und mit einem zugeordneten Referenzparameter zu vergleichen. Bei einer im Rahmen der Analyse, insbesondere in der Zeitdomäne, zuvor hochpassgefilterten Hüllkurve können zum Beispiel Nulldurchgänge gezählt werden. Anhand der Anzahl kann auf den (aktuellen) Zustand des überwachten Raumes ge-schlossen werden. Je mehr Merkmale oder Eigenschaftsparameter aus der Hüllkurve be-stimmt werden, desto genauer kann die Raumüberwachung ausgeführt werden.

## Patentansprüche

1. Verfahren zum Erkennen von Veränderungen in einem zu überwachenden Bereich (11) einer Beförderungsanlage (20) mit einem Schallsensor (30) und einer mit dem Schallsensor (34) verbundenen Auswerteeinheit (36), durch
-- Aussenden (S1) eines akustischen Impulses (62) in den zu überwachenden Bereich,
-- Aufzeichnen (S2) eines akustischen Antwortsignales des Impulses als Ist-Signal (64),
-- Bestimmen (S3) einer Hüllkurve (66) des Ist-Signales (64),
-- Erkennen (S5) von Veränderungen basierend auf der Hüllkurve (66),
wobei das Erkennen von Veränderungen basierend auf der Hüllkurve (66) **gekennzeichnet ist durch**
-- Bestimmen (S4) eines Spektrums der Hüllkurve (66) des Ist-Signales (64) als Ist-Messung (60).

2. Verfahren nach Anspruch 1, wobei das Erkennen von Veränderungen basierend auf der Hüllkurve (66) weiter **gekennzeichnet ist durch**
-- Vergleichen einer Referenz-Messung (50) mit der Ist-Messung (60).

3. Verfahren nach Anspruch 1 oder 2, wobei das Spektrum ein Frequenz-Spektrum, vorzugsweise ein Amplituden-Frequenz-Spektrum ist.

4. Verfahren nach einem der Ansprüche 2 oder 3, wobei beim Vergleichen eine Differenz von Referenz-Messung (50) und Ist-Messung (60) bestimmt wird.

5. Verfahren nach Anspruch 4, wobei ein Vergleichswert durch Summieren der Differenzen oder durch Summieren von aus den Differenzen bestimmten Werten bestimmt wird.

6. Verfahren nach Anspruch 5, wobei die Ist-Messung (60) als unterschiedlich zur Referenz-Messung (50) erkannt wird, falls der Vergleichswert eine Toleranzschwelle übersteigt.

7. Verfahren nach einem der vorangehenden Ansprüche, wobei das Aussenden des akustischen Impulses über einen Winkelbereich von zumindest 90 Grad erfolgt.

8. Verfahren nach einem der vorangehenden Ansprüche, wobei die Auswerteeinheit (36) einen Prozessor, zumindest einen mit dem Prozessor über einen Bus verbundenen Speicher und zumindest eine über den Bus verbundene Schnittstelle zur Kommunikation aufweist.

9. Verfahren nach einem der vorangehenden Ansprüche, wobei die Bestimmungen und das Erkennen von Veränderungen durch die Auswerteeinheit (36) durchgeführt werden.

10. Verfahren zum Erkennen eines leeren zu überwachenden Bereichs (11) einer Beförderungsanlage (20) mittels eines Verfahrens nach einem der Ansprüche 1 bis 9, wobei die Referenz-Messung (50) bei einem leerer zu überwachenden Bereich (11) bestimmt wird.

11. Verfahren nach Anspruch 10, wobei der zu überwachende Bereich (11) als leer erkannt wird, falls die Ist-Messung (60) als im Wesentlichen gleich zur Referenz-Messung (50) erkannt wird.

12. System mit einem Schallsensor (32) und einer mit dem Schallsensor verbundenen Auswerteeinheit (36) zur Erkennung von Veränderungen in einem zu überwachenden Bereich (11) einer Beförderungsanlage (20) zur Durchführung eines der Verfahren gemäss den Ansprüchen 1 bis 11.

13. Beförderungsanlage mit einem System nach Anspruch 12.

## Claims

1. Method for detecting changes in an area (11) to be monitored of a conveying system (20) having a sound sensor (30) and an evaluation unit (36) connected to the sound sensor (34), by
- - emitting (S 1) an acoustic pulse (62) into the area to be monitored,
- - recording (S2) an acoustic response signal of the pulse as an actual signal (64),
- - determining (S3) an envelope (66) of the actual signal (64),
- - detecting (S5) changes on the basis of the envelope (66),
wherein detecting changes on the basis of the envelope (66) is **characterized by**
- - determining (S4) a spectrum of the envelope (66) of the actual signal (64) as an actual measurement (60).

2. Method according to claim 1, wherein detecting changes on the basis of the envelope (66) is further **characterized by**
- - comparing a reference measurement (50) with the actual measurement (60).

3. Method according to either claim 1 or claim 2, wherein the spectrum is a frequency spectrum,
preferably an amplitude-frequency spectrum.

4. Method according to either claim 2 or claim 3, wherein a difference between the reference measurement (50) and the actual measurement (60) is determined during the comparison.

5. Method according to claim 4, wherein a comparison value is determined by summing the differences or by summing values determined from the differences.

6. Method according to claim 5, wherein the actual measurement (60) is detected as being different from the reference measurement (50) if the comparison value exceeds a tolerance threshold.

7. Method according to any of the preceding claims, wherein the acoustic pulse is emitted over an angular range of at least 90 degrees.

8. Method according to any of the preceding claims, wherein the evaluation unit (36) has a processor, at least one memory connected to the processor via a bus, and
at least one interface for communication connected via the bus.

9. Method according to any of the preceding claims, wherein the determinations and the detection of changes are carried out by the evaluation unit (36).

10. Method for detecting an empty area (11) to be monitored of a conveying system (20) by means of a method according to any of claims 1 to 9, wherein the reference measurement (50) is determined when the area (11) to be monitored is empty.

11. Method according to claim 10, wherein the area (11) to be monitored is detected as being empty if the actual measurement (60) is detected as being substantially equal to the reference measurement (50).

12. System having a sound sensor (32) and an evaluation unit (36) connected to the sound sensor for detecting changes in an area (11) to be monitored of a conveying system (20) for carrying out any of the methods according to claims 1 to 11.

13. Conveying system having a system according to claim 12.

## Revendications

1. Procédé pour la détection de modifications dans une zone à surveiller (11) d'une installation de transport (20) comportant un capteur acoustique (30) et une unité d'évaluation (36) connectée au capteur acoustique (34), par
-- l'émission (S1) d'une impulsion acoustique (62) dans la zone à surveiller,
-- l'enregistrement (S2) d'un signal de réponse acoustique de l'impulsion en tant que signal réel (64),
-- la détermination (S3) d'une enveloppante (66) du signal réel (64),
-- la détection (S5) de modifications sur la base de l'enveloppante (66),
dans lequel la détection de modifications sur la base de l'enveloppante (66) est **caractérisée par**
-- la détermination (S4) d'un spectre de l'enveloppante (66) du signal réel (64) en tant que mesure réelle (60).

2. Procédé selon la revendication 1, dans lequel la détection de modifications sur la base de l'enveloppante (66) est en outre **caractérisée par**
-- la comparaison d'une mesure de référence (50) avec la mesure réelle (60).

3. Procédé selon la revendication 1 ou 2, dans lequel le spectre est un spectre de fréquences, de préférence un spectre d'amplitudes-fréquences.

4. Procédé selon l'une des revendications 2 ou 3, dans lequel, lors de la comparaison, une différence entre la mesure de référence (50) et la mesure réelle (60) est déterminée.

5. Procédé selon la revendication 4, dans lequel une valeur de comparaison est déterminée en additionnant les différences ou en additionnant des valeurs déterminées à partir des différences.

6. Procédé selon la revendication 5, dans lequel la mesure réelle (60) est détectée comme différente de la mesure de référence (50) si la valeur de comparaison franchit un seuil de tolérance.

7. Procédé selon l'une des revendications précédentes, dans lequel l'émission de l'impulsion acoustique est effectuée par l'intermédiaire d'une plage angulaire d'au moins 90 degrés.

8. Procédé selon l'une des revendications précédentes, dans lequel l'unité d'évaluation (36) présente un processeur, au moins une mémoire connectée au processeur par l'intermédiaire d'un bus et au moins une interface connectée par l'intermédiaire du bus pour la communication.

9. Procédé selon l'une des revendications précédentes, dans lequel les déterminations et la détection des modifications sont mises en oeuvre par l'unité d'évaluation (36).

10. Procédé pour la détection d'une zone à surveiller (11) vide d'une installation de transport (20) au moyen d'un procédé selon l'une des revendications 1 à 9, dans lequel la mesure de référence (50) est déterminée lorsque la zone à surveiller (11) est vide.

11. Procédé selon la revendication 10, dans lequel la zone à surveiller (11) est détectée comme étant vide si la mesure réelle (60) est détectée comme étant sensiblement identique à la mesure de référence (50).

12. Système comportant un capteur acoustique (32) et une unité d'évaluation (36) connectée au capteur acoustique pour la détection de modifications dans une zone à surveiller (11) d'une installation de transport (20) pour la mise en oeuvre d'un des procédés selon les revendications 1 à 11.

13. Installation de transport comportant un système selon la revendication 12.
